# EUROPÄISCHE PATENTSCHRIFT

(11) **EP 1 703 184 B1**
(45) Veröffentlichungstag und Bekanntmachung des Hinweises auf die Patenterteilung: **14.11.2007**
(21) Anmeldenummer: 06100313.3
(22) Anmeldetag: 12.01.2006
(51) Int. Cl.: F16K 15/14

(54) **Ventil mit Rückschlagsventil**
Valve with check valve
Soupape avec clapet de retenue

(30) Priorität: 18.03.2005 DE 102005013085
(43) Veröffentlichungstag der Anmeldung: 20.09.2006
(73) Patentinhaber: Hydraulik-Ring GmbH, 97828 Marktheidenfeld (DE)
(72) Erfinder: Patze, Helmut, Dipl.-Ing.(FH), 97816 Lohr (DE); Cornea, Marius, Dipl.-Ing.(FH), 97816 Lohr (DE); Paschen, Uwe, Dipl.-Ing.(FH), 56457 Westerburg (DE)
(74) Vertreter: Cremer, Ulrike Theresia

(56) Entgegenhaltungen:
- EP-A- 0 834 655
- EP-A- 1 291 563
- EP-A- 1 477 636
- DE-A1- 3 829 698

## Beschreibung

Die Erfindung betrifft ein Ventil mit einem Rückschlagventil, die als ein integriertes Bauteil ausgeführt sind, insbesondere als automobiles Hydraulikventil.

Ventile im automotiven Umfeld sollen mit einem Minimum an Bauteilen zuverlässig über eine lange Lebensdauer zahlreiche Funktionen darstellen können. Hydraulische Ventile werden in einem Automobil an vielen verschiedenen Stellen eingesetzt, unter anderem als Steuerventile für Getriebe, Druckregelventile für Einspritzanlagen und Nockenwellenverstellventile. Nockenwellenverstellventile sind Ventile, die, häufig in einem Bereich des Zylinderkopfes eingesetzt, einen Nockenwellenversteller steuern und einstellen, wobei insbesondere ein schwenkmotorartiger Nockenwellenversteller je nach Druckbeaufschlagung zweier Hydraulikkammem die Nockenwelle in eine in Bezug auf die Kurbelwelle vor- oder nacheilende Position verstellen kann. Aufgrund von Drehmomenteinleitungen von der Nockenwelle auf den Nockenwellenversteller können Druckrückschläge des Hydraulikmediums, wie z. B. Motoröl, auf das Nockenwellenverstellventil einwirken. Ähnliche Situationen können bei Getrieben durch Lastwechsel hervorgerufen werden. Bisher sind für solche Druckspitzen gesonderte Rückschlagsventile eingesetzt worden.

In dem Versuch, mit möglichst wenig Teilen Rückschlagfunktionen zu realisieren, gibt es in der Patentliteratur zahlreiche Ansätze. In diesem Zusammenhang wird auf die Druckschriften US 4 241 758, FR 525 481, GB 2 161 583 A, US 2 781 059, US 1 860 163, US 894 286, US 699 273, US 5 323 806, US 3 783 590 und US 2 649 105 verwiesen, die sich alle durch den einen oder anderen Nachteil auszeichnen. Tauglichere Lösungen sind aus der US 2 918 941 entnehmbar, die einen außenliegenden Ring in einer Schienenführung über gleichmäßig verteilte Öffnungen offenbart. Ein außenliegender, nicht geschlossener Ring wird in der DE 2 043 002 A, insbesondere in den Figuren 7 und 8, gezeigt, die mit einer Arretierungsnut, einer Arretierungsschraube und gleichmäßig verteilten Bohrungen in einer außenliegenden Umlaufnut eine rückhaltende Funktion realisieren sollen. Ein ähnlicher Aufbau ist aus der Figur 2 der DE 2 025 168 A bekannt, die einen Ventilschließungskörper mit einem Stift darstellt, der als Lagesicherung dient. Aus dem Bereich der Kompressortechnik wird in der EP 0 069 531 B1 ein einspannbarer Ring mit zwei Steuernuten in Figur 10 gezeigt, die durch ein Gleitglied unterschiedlich weit zu öffnen sind. Auch sei auf die JP 55 072965 A verwiesen.

Eine Lamellenöffnung ist aus der FR 996 121 bekannt, die an einem Ende einen Ring aufweist, der andernends in einem doppelwandigen Klemmsitz eines Ventils steckt.

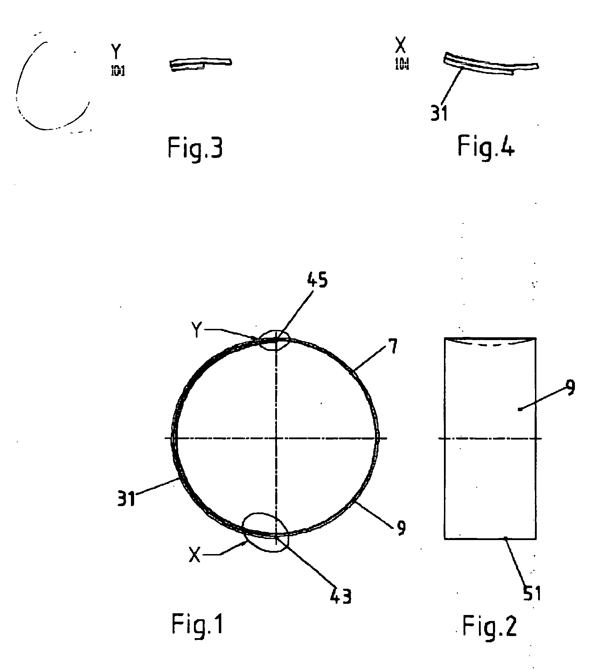

In der EP 1 475 518 A schlägt unter anderem einer der Erfinder der vorliegenden Erfindung vor, wie die Durchgangsöffnung in der Hülse eines Ventils geschickt gestaltbar ist, damit das Druckguss- oder Spritzwerkzeug zur Herstellung der Hülse ohne zusätzliche Schieber geschaffen werden kann. In der Figur 2 der Offenlegungsschrift wird gezeigt, dass das Herstellverfahren auch dazu dienen kann, gleichmäßig über den Umfang verteilte Durchgangsöffnungen zu schaffen.

Eine weitere Art der innenliegenden, nicht geschlossenen Lasche ist aus der US 3 882 891 entnehmbar, die mittels Schraube und Lagerplatte an einer festen Stelle des Rohres arretiert wird. Um den bisher bekannten Arretierungslösungen vorzubeugen, hat die Anmelderin in den in der EP 1 291 563 A2 vorgestellten Lösungen das erste Mal der Fachwelt ein frei gelagertes Schließelement unterbreitet. In der Druckschrift wird das erfindungsgemäße Prinzip dahingehend erklärt, dass die Federkraft so gewählt wird, dass bei einem vorgegebenen Druck des Hydraulikmediums eine Bohrung freigegeben werden kann, indem der Durchmesser des Schließelements vergrößert oder verringert wird.

EP 1 291 563 A2 offenbart ein Ventil gemäß dem Oberbegriff des Anspruchs 1.

### Offenbarung der Erfindung

### Technische Aufgabe

Basierend auf den vorgestellten Lösungen stellte die Anmelderin durch zahlreiche Versuche fest, dass es Zustände geben kann, bei denen die vorgeschlagene Lösung nicht die vom Automobilkunden geforderte Zuverlässigkeit unter allen Umständen garantieren kann. Zur Steigerung der Zuverlässigkeit und der Funktionssicherheit suchten die Erfinder jahrelang nach Lösungen, mit denen erneut gestiegene Anforderungen eines Automobilkunden garantiert werden können.

### Technische Lösung

Die erfindungsgemäße Aufgabe wird durch ein Ventil mit Rückschlagventil nach Anspruch 1 gelöst. Vorteilhafte Ausgestaltungen sind den abhängigen Ansprüchen zu entnehmen.

### Vorteilhafte Wirkungen

Viele hydraulische Ventile sind mit einer Hydraulikkomponente und einer elektrischen Ansteuerkomponente aufgebaut. Im Folgenden wird der hydraulische Teil des Ventils betrachtet. Der hydraulische Teil hat eine Zentralführung. Das Ventil umfasst weiterhin ein Rückschlagventil. Die Zentralführung kann Teil des Rückschlagventils sein. Ein weiteres Teil des Rückschlagventils ist ein Band, das zu einem geschlossenen Ring geformt ist.

Das Band wird auf der Innenseite der Zentralführung platziert. Dabei wird das Band so platziert, dass es als geschlossener Ring ohne punktgenaue Arretierungsmaßnahmen, wie Arretierungsklammern oder Arretierungsschrauben, auskommend, frei floatend oder frei drehbar gelagert ist. Das Band selbst ist ein geschlossener Ring, der keine, z. B. eingestanzten, Öffnungen aufweist. Das Band zusammen mit einzelnen Durchgangsöffnungen, die in der Zentralführung zum Beispiel als Bohrungen vorhanden sind, bildet das Rückschlagsventil, das dann schließt, wenn der Druck auf der Innenseite des geschlossenen Bandes größer ist als der Druck auf der Außenseite des geschlossenen Bandes zuzüglich einer entsprechenden Federstahlhysterese und Reibungskraft. Die Durchgangsöffnungen sind nur über einen Teilabschnitt der Zentralführung verteilt. Sie existieren nicht über den gesamten Kreisbogen der runden Zentralführung. Sie sind damit unsymmetrisch auf einem Teilabschnitt vorhanden. Wirkt eine Druckspitze entgegen der Vorzugsdruckrichtung zum Verbraucher von der Druckquelle auf das Ventil liegt ein Rückschlagsdruckgefälle vor, das nicht auf den Druckerzeuger oder die Druckquelle zurückschlagen soll.

Durch die unsymmetrische Verteilung der Durchgangsöffnungen bietet die Zentralführung in ihrem Innenbereich dem Band einen Abstützbereich, der im Bereich der fehlenden Durchgangsöffnungen, dem durchgangsöffnungsfreien Bereich, liegt. Nur in dem Bereich der Zentralführungsdurchgangsöffnungen ist das Band eindrückbar. Bei ungleich verteilten Strömungsverhältnissen oder Passungsungenauigkeit, beispielsweise in der Aufnahmebohrung für das Ventil im Zylinderkopf, kann das Band nicht so verformt werden, dass es trotz Rückschlagdruckgefällen an einer Stelle geöffnet bleibt. Überdrücke, zum Beispiel hervorgerufen durch den Nockenwellenversteller, können so nicht mehr auf den Druckanschluss durchschlagen. Die Ölpumpe wird geschont und die Verstellgeschwindigkeit erhöht. Die Federbiegung des Ringes ist leichter einstellbar. Innerhalb eines bestimmten Toleranzbandes kann jeder beliebige Federstahl in Form des geschlossenen Ringes verwendet werden.

Hierbei können die Durchgangsöffnungen zwar untereinander gleichmäßig beabstandet in ihrem Teilabschnitt vorliegen, es muss aber ein Teilabschnittskreisbogen sichergestellt sein, in dem keine Durchgangsöffnungen vorhanden sind. Der Teilabschnittskreisbogen, der zum Beispiel nur 120 Grad überdecken muss, gilt als der Abstützungsbereich für den Ring. Der sonst frei bewegliche Ring kann sich innerhalb der Zentralführung frei drehen. Er verändert immer wieder seine Lage. Dies trägt zu einer gleichmäßigen Belastung des Federstahls bei.

Wenn das erfindungsgemäße Ventil als Zylinderkopfventil für einen schwenkmotorartigen Nockenwellenversteller verwendet werden soll, kann es sich um ein stößelbetriebenes Cartridge-Ventil handeln, das zwei Arbeitsanschlüsse, einen Druckanschluss und einen Tankanschluss aufweist. Durch ein wechselweises Verschalten des Druckanschlusses mit der einen oder der anderen Arbeitsanschlussseite wird der Nockenwellenversteller verstellt. Mit einem erfindungsgemäßen Rückschlagventil können Druckspitzen eines Arbeitsanschlusses gegenüber dem Druckanschluss sicher unterbunden werden, indem das Rückschlagventil an der Stelle des Druckanschlusses aufgebaut ist.

Nach einer, auch günstigen, Ausgestaltung ist der geschlossene Ring aus einem Federstahl gefertigt, wobei der Ring einen weiten Überlappungsbereich hat. Weit bedeutet in dem Sinne, dass ein wesentlicher Abschnitt des Bandes des Ringes, zum Beispiel 90°, überlappt und so den Ring schließt. Eine noch höhere Ringstabilität wird erreicht, wenn der Ring sogar 180° oder 270° Überdeckungswinkel aufweist. Die Überdeckung darf aber nicht so groß sein, dass der Ring bei normalen Druckverhältnissen nicht öffnen kann. Aus Materialersparnisgründen ist aber jeder Entwickler bestrebt, zwischen Stabilität und Materialersparnis ein Optimum zu bilden.

Der Ring selbst zeichnet sich dadurch aus, dass er zwar seitlich nur minimal verschiebbar ist, weil er in einer umlaufenden Innennut der Zentralführung gelagert ist, er aber im Übrigen nicht arretiert werden muss, sondern ohne Arretierung auskommend, frei drehbar, floatend, schwimmend, leicht rotationsfähig gelagert ist. Somit kann der Ring aufgrund der Ölströmung leicht rotieren und verändert im Betrieb in der Innennut seine genaue Lage. Das trägt zu einer gleichmäßigen Belastung des Federstahls bei, der somit eine längere Lebensdauer sicherstellen kann.

Die Innennut ist als gestufte Nut ausgeführt, wenn Beschädigungen an dem Band vermieden werden sollen und um ein möglichst leckagefreies Schließen zu erreichen. Um möglichst wenig Prozessschritte bei der Herstellung zu haben, wird die Zentralführung nur mit einer zweigestuften Nut ausgestaltet, einer tieferen Nut und einer flacheren Nut. Die tiefere Nut liegt unterhalb der flacheren Nut, die breiter ist als die tiefere Nut. Somit ist die flachere Nut eine aufgefächerte Nut, die zur tieferen Nut hin verläuft.

Die Enden des geschlossenen Ringes werden gratfrei, gebrochen hergestellt, damit die Enden bei der Rotation des Ringes keine Kratzspuren in dem Ring erzeugen können. Auch können sie aufgebogen sein.

Besonders günstig ist es, wenn die Anzahl der Rückschlagventile in dem Ventil reduziert werden kann. Hierzu wird das Rückschlagventil an dem P-Anschluss der Zentralführung platziert. Sollen Druckdurchschläge oder Druckrückschläge auf den Druckerzeuger unterbunden werden, reicht es, wenn der Druckanschluss abkoppelbar ist.

Nach einer Ausgestaltungsvariante können die Arbeitsanschlüsse mit gleichmäßig, symmetrisch verteilten, gleichmäßig beabstandeten Öffnungen über dem Umfang der Zentralführung versehen sein. Führt die Raumgestaltung aufgrund der Stößelgeometrie oder der Kanalführung, zum Beispiel die Kanalführung an das Cartridge-Ventil heran, dazu, dass die Öffnungen nicht gleichmäßig verteilbar sind, so kann nach einer anderen Ausgestaltung die Öffnungsverteilung über den Umfang auch unsymmetrisch ausgestaltet sein. Die Gestaltung hängt jeweils von den Anforderungen des Cartridge-Ventils ab.

In Versuchen hat es sich gezeigt, dass bei einem Verhältnis der Durchgangsöffnungsdurchmesser zur Breite des Bandes von weniger als 0,5, insbesondere zwischen 0,4 und 0,5, die Durchgangsöffnungen sicher verschließbar sind und bei der benannten Verhältniswahl auf der anderen Seite nicht unnötiges Material für das Band verbraucht wird.

### Kurze Beschreibung der Zeichnungen

Für das weitere Verständnis wird auf die beiliegenden Figuren verwiesen, wobei Figur 1 einen erfindungsgemäßen Ring zeigt,
Figur 2 eine Draufsicht des Rings zeigt,
Figur 3 und Figur 4 jeweils Enden des Rings zeigen,
Figur 5 eine geeignete Zentralführung zeigt,
Figur 6 den Ausschnitt aus der Zentralführung entlang der Linie Z zeigt,
Figur 7 den Ausschnitt W der Figur 6 zeigt,
Figur 8 einen gebrochenen Schnitt V der Figur 6 zeigt,
Figur 9 einen Schnitt durch die Zentralführung entlang der Linie BB zeigt,
Figur 10 einen Schnitt durch die Zentralführung der Figur 5 entlang der Linie AA zeigt,
Figur 11 einen Schnitt entlang der Linie PP der Zentralführung nach Figur 5 zeigt,
Figur 12 eine zweite geeignete Zentralführung zeigt,
Figur 13 einen Schnitt entlang der Linie BB der Zentralführung nach Figur 12 zeigt,
Figur 14 einen Schnitt entlang der Linie AA der Zentralführung nach Figur 12 zeigt,
Figur 15 einen Zentralführungsschnitt entlang der Linie PP nach Figur 12 zeigt
und Figur 16 eine Zusammenbaudarstellung im Bereich Z der Figuren 12 oder 5 darstellen.

### Ausführungsform(en) der Erfindung

Figur 1 zeigt das zu einem Ring 7 geformte Band 9, das in der Darstellung eine Überlappung 31 von ca. 180° zeigt. Andere Überlappungen zwischen 90 und 270° sind ebenfalls geeignet, die tatsächliche Überlappung hängt vom Anwendungsfall ab. Der Ring 7 ist aus einem durchgängigen, öffnungsfreien Material geformt, der, wie in Figur 2 dargestellt, über seine Breite 51 je nach seiner federnden Eigenschaft eindrückbar ist. Die Enden 43, 45 der Figur 1 sind in den Figuren 3 und 4 noch einmal deutlicher dargestellt, aus den Darstellungen ist das gebrochene Ende entnehmbar.

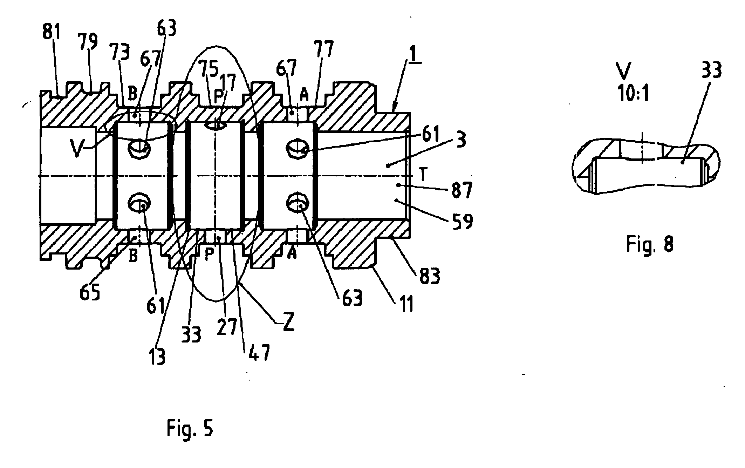

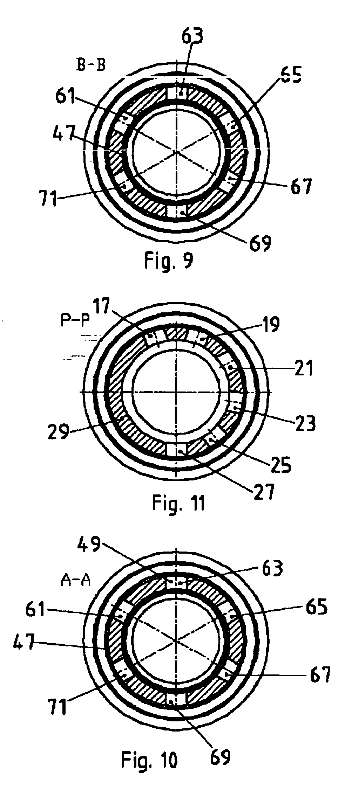

Eine Zentralführung 3 eines Ventils 1 (wobei graphisch nur der Hydraulikteil ohne Stößel und Kolben dargestellt ist) ist in Figur 5 wiedergegeben. Die Zentralführung 3 hat eine Außenseite 11 und eine Innenseite 13. Die Innenseite 13 zeigt auf einen Bereich, der innen hohl ist, sie bietet einen Zentralkanal 87, an dessen einem Ende wahlweise ein Anschluss, zum Beispiel der Tankanschluss T, mit Durchgangsöffnung 59 vorhanden sein kann. Bei der dargestellten Zentralführung 3 handelt es sich um ein Cartridge-Ventil, das eine angepasste Oberflächenkontur für seine Aufnahmeöffnung, zum Beispiel im Zylinderkopf, hat. An den einzelnen Anschlüssen, dem ersten Arbeitsanschluss A, dem zweiten Arbeitsanschluss B und dem Druckanschluss P, sind Vertiefungen 73, 75, 77 vorgesehen, die auch gestufte umlaufende Nuten über den gesamten Umfang der Zentralführung 3 sein können. Weitere Nuten 79, 81, 83 sind in den Randbereichen der Zentralführung vorgesehen, um Dichtungen, Passungen, Arretierungen, Halteringe oder Bördelkanten aufzunehmen. Die Nut 81, die komplett umlaufend ist, kann zum Beispiel das Gehäuse des magnetischen Teils des Ventils 1 (nicht näher dargestellt) halten. Die umlaufende Nut 79 ist eine O-Ringnut für einen Dichtring. Auf der anderen Seite der Zentralführung 3 ist eine zurückgesetzte Nut 83 in Form einer Umrandung vorgesehen, die zum Halt und zur Befestigung des gesamten Ventils in seiner Aufnahmeöffnung (nicht näher dargestellt) dienen soll. Von den Anschlüssen A, B, P abgehend sind Durchgangsöffnungen der ersten und zweiten Art vorgesehen, die die Verbindung von den Anschlüssen zu dem Zentralkanal 87 ermöglichen. Die Durchgangsöffnungen der ersten Art 17, 19, 21, 23, 25, 27 sind über den Umfang der Zentralführung 3 nur teilweise verteilt, sie sind unsymmetrisch. Der Abstand in dem dargestellten Beispiel der Figur 11 zeigt eine gleichmäßige Beabstandung zwischen den einzelnen Durchgangsöffnungen 17, 19, 21, 23, 25, 27. Es gibt aber einen Teilabschnittskreisbogen 29, der öffnungsfrei ist. Im dargestellten Beispiel der Figur 11 beträgt der Teilabschnittskreisbogen 29 120°. Die Durchgangsöffnungen 17, 19, 21, 23, 25, 27 sind kreisrunde Bohrungen durch die Wand der Zentralführung 3, denkbar sind auch andere Formen der Durchgangsöffnungen, z.B. rechteckige bei Druckgussbuchsen. Demgegenüber sind Durchgangsöffnungen der zweiten Art 61, 63, 65, 67, 69, 71, auch als Bohrungen dargestellt in Figur 9 und Figur 10, symmetrisch über den gesamten Umfang gleichmäßig beabstandet und mit gleichen Kreisbogenabschnitten zwischen den Öffnungen vorgesehen.

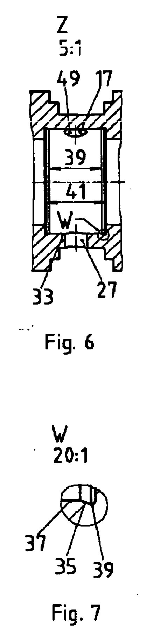

Die Aufnahmenut für das Band 9 ist eine Innennut 33, die unterhalb der umlaufenden Anschlussnut 75 des Anschlusses P, dem Druckanschluss, liegt. In Figur 6 ist der Ausschnitt Z der Zentralführung größer dargestellt. In Figur 7 wird der abgestufte Rand der Innennut 33 nach Figur 6 noch einmal größer dargestellt. Es ist zu sehen, dass die Innennut 33 eine gestufte Innennut ist, die zwei Breiten 39, 41 aufweist. Die Innennut 33 besteht aus einer tieferen Innennut 35 und einer flacheren Innennut 37. Im Bereich der flacheren Innennut 37 liegt der Ring 7, der die Durchgangsöffnungen, wie zum Beispiel 17, in die eine Druckrichtung verschließt und in die andere Druckrichtung als Öffnung freigibt. Betrachtet man Figur 7 und Figur 8 näher, so ist die detailgetreue Ausgestaltung der Innennut 33 ersichtlich. Der abgestufte Rand der Innennut 33 verhindert ein Verkanten des Rings 7. Die breitere Nut schont die Ränder des Bandes 9. Weiterhin bietet es eine Dichtwirkung des Rückschlagventils. Ohne Freidrehungen könnte sich das Band nicht dicht genug anlegen.

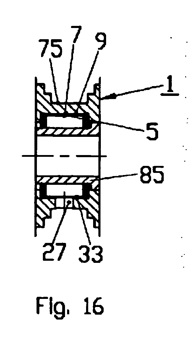

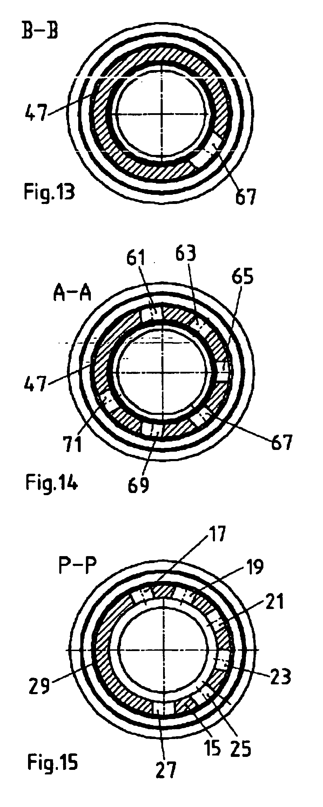

In der Ausführungsform nach Figur 12 sind ähnliche Teile mit gleichen, beziehungsweise um 100 höher nummerierten, Bezugszeichen versehen. Einer der wesentlichen Unterschiede in der Zentralführung 103 liegt darin, dass die in den Figuren 13 und 14 näher dargestellten Durchgangsöffnungen der zweiten Art 61, 63, 65, 67, 69, 71 unsymmetrisch über den Umfang der Zentralführung 103 verteilt sind, bedingt durch strömungstechnische Anforderungen und Kanalführungsanforderungen. Der in Figur 15 dargestellte Schnitt der Zentralführung 103 nach Figur 12 zeigt in einigen Aspekten das gleiche erfinderische Prinzip wie in Figur 5, über den Umfang verteilt gibt es einen Abstützbereich für das Rückschlagventil und einen Durchlassbereich, der sich aus Durchgangsöffnungen 17, 19, 21, 23, 25, 27 zusammensetzt. Ebenso können es sechs aber auch fünf oder sieben Öffnungen sein. Die Durchgangsöffnungen 17, 19, 21, 23, 25, 27 überstreichen einen Teilabschnitt des rotationssymmetrischen Ventils 1, wobei rotationssymmetrisch in dem Sinne zu verstehen ist, dass die Durchgangsöffnungen zum Beispiel bei der Betrachtung nicht näher berücksichtigt worden sind. Es handelt sich also um ein rotationssymmetrisches Ventil, wenn ohne Blick auf die Details eine grobe Betrachtung durchgeführt wird.

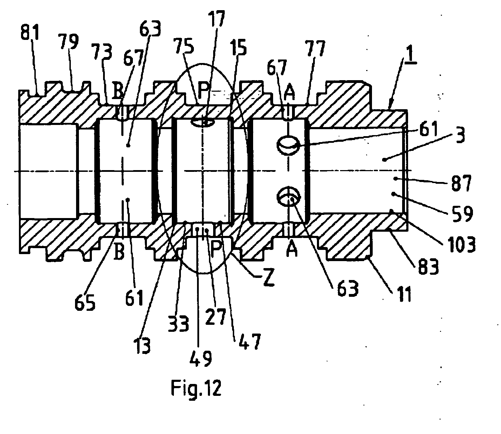

Die Figur 16 zeigt einen Ausschnitt eines zusammengebauten Ventils 1 entlang des Schnittes Z der Figur 5 oder Figur 12. Das Rückschlagventil 5 besteht aus einem Ring 7, der in der Innennut 33 liegt. Die Durchgangsöffnung 27 führt von der Außennut 75 bis an den Ring 7 heran.

Im zusammengebauten Zustand fährt der Kolben 85 in der Zentralführung 3, 103 hin und her, auch der Ring 7 ist beweglich gelagert. Aufgrund der Federeigenschaften des Rings 7 drückt er gegen die Durchgangsöffnungen 17, 19, 21, 23, 25, 27. Bei Druckanstieg am P-Anschluss wird der Ring 7, so wie in Figur 2 strichliert angedeutet, leicht eingedrückt. Das Hydraulikmedium, das Öl, kann über den sich bildenden Fließraum über die Ränder der Innennut 33 nachströmen.

### Gewerbliche Anwendbarkeit

Auch wenn einzelne Beispiele wiedergegeben sind, ist es verständlich, dass nach einem erfinderischen Aspekt das mehrfach funktionale Ventil einen Abstützbereich und einen Einströmbereich für die Rückschlagklappe, den Rückschlagfederring, bietet, sodass der Rückschlagfederring einen kreisteilbogenrunden Rastbereich und einen eindrückbaren Durchlassbereich für das Hydraulikmedium, des seitlich anliegenden Bandes aufweist, wobei sich der eindrückbare Bereich über einen Kreisbogen des Rings unterhalb der Durchlassöffnungen bildet, die in der Darstellung nahezu mittig in Bezug auf die Breite liegen.

Bezugszeichenliste

**Tabelle 1**

| | |
|---|---|
| A | Arbeitsanschluss 1 |
| B | Arbeitsanschluss 2 |
| P | Druckanschluss |
| T | Tankanschluss |
| Z | Ausschnitt |
| 1 | Ventil |
| 3 | Zentralführung |
| 5 | Rückschlagsventil |
| 7 | Ring |
| 9 | Band |
| 11 | Außenseite der Zentralführung |
| 13 | Innenseite der Zentralführung |
| 15 | Teilabschnitt |
| 17, 19, 21, 23, 25, 27 | Durchgangsöffnung der ersten Art |
| 29 | Teilabschnittskreisbogen |
| 31 | Überlappung |
| 33 | Innennut |
| 35 | Tiefere Innennut |
| 37 | Flachere Innennut |
| 39 | Breite der Innenut 35 |
| 41 | Breite der Innennut 37 |
| 43, 45 | Enden des Rings 7 |
| 47 | Umfang der Zentralführung 3 |
| 49 | Durchgangsöffnungsdurchmesser |
| 51 | Breite des Bandes 9 |
| 59 | Durchgangsöffnung |
| 61, 63, 65, 67, 69, 71 | Durchgangsöffnungen der zweiten Art |
| 73, 75, 77 | Vertiefungen, umlaufende Anschlußnut |
| 79, 81, 83 | Weitere Nuten, zurückgesetzte Umrandung |
| 85 | Kolben |
| 87 | Zentralkanal |
| 103 | Zentralführung |

## Patentansprüche

1. Ventil (1) mit Zentralführung (3) und einem Rückschlagventil (5), wobei das Rückschlagventil (5) ein zu einem geschlossenen Ring (7) geformtes Band (9) umfasst, das auf der Innenseite der Zentralführung (3) frei floatend drehbar gelagert ist, wobei der geschlossene Ring (7) ein öffnungsfreies Band (9) ist,
**dadurch gekennzeichnet, dass**
das Band (9) auf einem Teilabschnitt (15) der Zentralführung (3) unsymmetrisch verteilte Durchgangsöffnungen (17, 19, 21, 23, 25, 27) zur Zentralführung (3) bei Rückschlagsdruckgefällen verschließt.

2. Ventil (1) nach Anspruch 1, weiterhin **dadurch gekennzeichnet, dass** die Durchgangsöffnungen (17, 19, 21, 23, 25, 27) Bohrungen sind, die untereinander gleichmäßig beabstandet innerhalb des Teilabschnitts (15) vorliegen, insbesondere über einem Teilabschnittskreisbogen (29) von 240°.

3. Ventil (1) nach Anspruch 1 oder 2, weiterhin **dadurch gekennzeichnet, dass** das Ventil (1) ein stößelbetriebenes Catridge-Ventil ist, insbesondere mit zwei Arbeitsanschlüssen (A, B), einem Druckanschluss (P) und einem Tankanschluss (T), wobei die Arbeitsanschlüsse (A, B) wahlweise wechselweise mit dem Druckanschluss (P) verbindbar sind.

4. Ventil (1) nach Anspruch 1, 2 oder 3, weiterhin **dadurch gekennzeichnet, dass** der geschlossene Ring (7) aus einem Federstahl gefertigt ist, der den Ring (7) durch eine Überlappung (31) eines wesentlichen Abschnitts des Bandes (9) bildet, vorzugsweise einem Abschnitt, der wenigstens 90° des Ringes (7) und nicht mehr als 270° des Ringes (7) überdeckt, insbesondere ungefähr 180° überdeckt.

5. Ventil (1) nach einem der vorhergehenden Ansprüche, weiterhin **dadurch gekennzeichnet, dass** der Ring (7) arretierungsfrei in einer umlaufenden Innennut (33) der Zentralführung (3) lagert.

6. Ventil (1) nach Anspruch 5, weiterhin **dadurch gekennzeichnet, dass** die Innennut (33) eine gestufte Nut, insbesondere eine zweigestufte Nut ist, deren tiefere Nut (35) eine geringere Breite (39) aufweist als die aufgefächerte, flachere Nut (37).

7. Ventil (1) nach einem der vorhergehenden Ansprüche, weiterhin **dadurch gekennzeichnet, dass** die Enden (43, 45) des geschlossenen Rings (7) gratfrei und gebrochen sind.

8. Ventil (1) nach einem der Ansprüche 3 bis 7, weiterhin **dadurch gekennzeichnet, dass** der Ring (7) auf der Innenseite der Zentralführung (13) unterhalb des Druckanschlusses (P), insbesondere ausschließlich, vorhanden ist.

9. Ventil (1) nach einem der Ansprüche 3 bis 8, weiterhin **dadurch gekennzeichnet, dass** die Arbeitsanschlüsse (A, B) mit auch unsymmetrisch, gleichmäßig über den gesamten Umfang (47) verteilten, insbesondere zweiten, Öffnungen zur Zentralführung (3) ausgestattet sind.

10. Ventil (1) nach einem der Ansprüche 3 bis 8, weiterhin **dadurch gekennzeichnet, dass** die Arbeitsanschlüsse (A, B) mit Bereichen ausgestattet sind, die Öffnungen zur Zentralführung (3) aufweisen, und mit Bereichen ausgestattet sind, die öffnungsfrei ausgeführt sind.

11. Ventil (1) nach einem der vorgehenden Ansprüche, weiterhin **dadurch gekennzeichnet, dass** die Durchgangsöffnungsdurchmesser (49) in einem Verhältnis unterhalb von 0,5, insbesondere zwischen 0,4 und 0,5, einer Breite (51) des Bandes (9) gegeben sind.

## Claims

1. Valve (1) with central guide (3) and a non-return valve (5), wherein the non-return valve (5) comprises a band (9) formed into a closed ring (7), which
is mounted in a freely floating rotatable manner at the inside of the central guide (3), wherein the closed ring (7) is an opening-free band (9),
**characterized in that**
the band (9) along a sub-portion (15) of the central guide (3) closes asymmetrically distributed through-openings (17, 19, 21, 23, 25, 27) to the central guide (3) in the event of blowback pressure gradients.

2. Valve (1) according to claim 1, further **characterized in that** the through-openings (17, 19, 21, 23, 25, 27) are bores that are spaced uniformly apart from one another inside the sub-portion (15), in particular over a sub-portion arc (29) of 240°.

3. Valve (1) according to claim 1 or 2, further **characterized in that** the valve (1) is a plunger-operated cartridge valve, in particular having two working ports (A, B), a pressure port (P) and a tank port (T), wherein the working ports (A, B) are selectively alternately connectable to the pressure port (P).

4. Valve (1) according to claim 1, 2 or 3, further **characterized in that** the closed ring (7) is manufactured from a spring steel that forms the ring (7) by means of an overlap (31) of a substantial portion of the band (9), preferably a portion that overlaps at least 90° of the ring (7) and not more than 270° of the ring (7), in particular approximately 180°.

5. Valve (1) according to one of the preceding claims, further **characterized in that** the ring (7) is mounted in an arrest-free manner in a circumferential internal groove (33) of the central guide (3).

6. Valve (1) according to claim 5, further **characterized in that** the internal groove (33) is a stepped groove, in particular a two-stepped groove, the deeper groove (35) of which has a smaller width (39) than the fanned-out, flatter groove (37).

7. Valve (1) according to one of the preceding claims, further **characterized in that** the ends (43, 45) of the closed ring (7) are free of burrs and broken.

8. Valve (1) according to one of claims 3 to 7, further **characterized in that** the ring (7) at the inside of the central guide (13) is disposed, in particular exclusively, below the pressure port (P).

9. Valve (1) according to one of claims 3 to 8, further **characterized in that** the working ports (A, B) are equipped with, in particular second, openings to the central guide (3) that are also distributed asymmetrically, uniformly over the entire circumference (47).

10. Valve (1) according to one of claims 3 to 8, further **characterized in that** the working ports (A, B) are equipped with regions that have openings to the central guide (3) and with regions that are designed without openings.

11. Valve (1) according to one of the preceding claims, further **characterized in that** the through-opening diameters (49) are provided in a ratio below 0.5, in particular between 0.4 and 0.5, to a width (51) of the band (9).

## Revendications

1. Soupape (1) dotée d'un guide central (3) et d'un clapet de retenue (5), le clapet de retenue (5) comprenant une bande (9) transformée en anneau (7) et disposée de façon mobile flottant librement sur le côté intérieur du guide central (3), l'anneau fermé (7) étant une bande (9) exempte d'ouvertures,
**caractérisée en ce que**
la bande (9) enserre sur une partie de segment (15) du guide central (3) les ouvertures de passage (17, 19, 21, 23, 25, 27) réparties de façon asymétrique et s'ouvrant vers le guide central (3) à l'aide de détentes de pression de retenue.

2. Soupape (1) selon la revendication 1, **caractérisée en outre en ce que** les ouvertures de passage (17, 19, 21, 23, 25, 27) sont des alésages, disposés à écart régulier les uns des autres à l'intérieur de la partie de segment (15), notamment sur un arc de cercle de la partie de segment (29) de 240°.

3. Soupape (1) selon la revendication 1 ou 2, **caractérisée en outre en ce que** la soupape (1) est une soupape à cartouches actionnée par piston, dotée notamment de deux raccords de travail (A, B), d'un raccord de pression (P) et d'un raccord de réservoir (T), les raccords de travail (A, B) pouvant être reliés au choix de façon alternative au raccord de pression (P).

4. Soupape (1) selon la revendication 1, 2 ou 3, **caractérisée en outre en ce que** l'anneau fermé (7) est fabriqué en acier à ressorts qui forme l'anneau (7) à travers un chevauchement (31) d'un segment essentiel de la bande (9), de préférence un segment qui recouvre au moins 90° de l'anneau (7) et pas plus de 270° de l'anneau (7), notamment 180° environ.

5. Soupape (1) selon l'une quelconque des revendications précédentes, **caractérisée en outre en ce que** l'anneau (7) est disposé sans butée dans une rainure intérieure (33) périphérique du guide central (3).

6. Soupape (1) selon la revendication 5, **caractérisée en outre en ce que** la rainure intérieure (33) est une rainure à étage, notamment une rainure à double étage dont la rainure (35) la plus profonde présente une largeur (39) plus limitée que la rainure (37) en forme d'éventail, plus plane aplanie.

7. Soupape (1) selon l'une quelconque des revendications précédentes, **caractérisée en outre en ce que** les extrémités (43, 45) de l'anneau (7) fermé sont sans ébarbure et sont cassées.

8. Soupape (1) selon l'une quelconque des revendications 3 à 7, **caractérisée en outre en ce que** l'anneau (7) sur le côté intérieur du guide central (13) est disposé en dessous du raccord de pression (P), notamment exclusivement en dessous de lui.

9. Soupape (1) selon l'une quelconque des revendications 3 à 8, **caractérisée en outre en ce que** les raccords de travail (A, B) sont équipés d'ouvertures, notamment de deux ouvertures, asymétriques réparties de façon régulière sur l'ensemble du périmètre (47) et s'ouvrant vers le guide central (3).

10. Soupape (1) selon l'une quelconque des revendications 3 à 8, **caractérisée en outre en ce que** les raccords de travail (A, B) sont équipés de zones présentant des ouvertures s'ouvrant vers le guide central (3) et de zones exemptes d'ouvertures.

11. Soupape (1) selon l'une quelconque des revendications précédentes, **caractérisée en outre en ce que** les diamètres de l'ouverture de passage (49) sont compris dans un rapport inférieur à 0,5, notamment entre 0,4 et 0,5, par rapport à une largeur (51) de la bande (9).
